# EUROPEAN PATENT SPECIFICATION

(11) **EP 3 473 369 B1**
(45) Date of publication and mention of the grant of the patent: **02.06.2021**
(21) Application number: 17197803.4
(22) Date of filing: 23.10.2017
(51) Int. Cl.: B23K 9/20

(54) **METHOD OF CONTROLLING THE REMAINING LIFE TIME OF A STUD HOLDER IN A STUD WELDING DEVICE, AND ARRANGEMENT TO IMPLEMENT THE SAME**
VERFAHREN ZUR STEUERUNG DER RESTLICHEN LEBENSZEIT EINES BOLZENHALTERS IN EINER BOLZENSCHWEISSVORRICHTUNG, UND ANORDNUNG ZUR DURCHFÜHRUNG DES VERFAHRENS
PROCÉDÉ DE CONTRÔLE DE LA DURÉE DE VIE RESTANTE D'UN PORTE-GOUJON DANS UN DISPOSITIF DE SOUDAGE DE GOUJONS, ET AGENCEMENT POUR METTRE EN OEUVRE LE PROCÉDÉ

(43) Date of publication of application: 24.04.2019
(73) Proprietor: Newfrey LLC, New Britain, CT 06053 (US)
(72) Inventor: Eissara, Bah, 35394 Gießen (DE); Krause, Tobias, 35394 Gießen (DE)
(74) Representative: SBD IPAdmin

(56) References cited:
- CN-U- 201 993 059
- DE-A1- 10 035 371
- DE-A1-102014 212 735
- DE-U1- 20 105 789
- GB-A- 2 094 201
- US-A- 5 048 320

## Description

The present invention is directed to a method of controlling the remaining life time of a stud holder in a stud welding device, and to an arrangement for implementing the method for controlling a stud holder of a stud welding device.

Stud welding is often performed as an automated process and a plurality of welds are performed by the same device. The positioning of the welding head or the bolt and the welding are implemented automatically.

Stud welding devices commonly comprise a welding head with a stud holder having a pointed region for holding a weld stud. The stud holder is movable substantially perpendicularly to the surface of a workpiece and away from it. The welding device comprises a system for producing an arc by lifting and striking between the weld part and the surface of the workpiece. GB2094201 discloses an electrical stud welding apparatus adapted to weld studs of different diameters with a conical feeler used to determine the diameter of the bore of the stud holder.

The stud holder may be a hollow tubular stud holder which is tapered in its pointed region and has tongues which are formed in such a way that a weld stud pushed through the hollow tubular stud holder spreads the tongues appart upon its arrival in the pointed region and can therefore be pushed out of the stud holder completely.

A weld stud pushed through the stud holder is pushed out of the stud holder to a certain extent, so it can be welded to a component or a workpiece. Once the weld stud has been welded to the component the entire stud welding device is pulled back along the weld stud axis and the stud holder releases the weld stud completely.

The quality of the welding result depends, inter alia, on the fact that the studs are accurately positioned and are welded essentially perpendicular to the component. If damages occurs to the stud holder, the stud is no longer held properly and can, for example, be obliquely-welded to a component or workpiece.

Document DE20105789U1 discloses a stud holder provided with a sensor equipment, for example strain gauges, adapted to detect a broken tongue of the stud holder. Document US5048320 is more generally directed to a method of inspection of structures with a pressure sensor.

Document DE10035371 also discloses a stud holder comprising a sensor equipment connected to an evaluation and control unit in order to compare a nominal value with a measured value. Such processing allows to detect a stud holder which is defect.

However, such sensor equipment is difficult to implement, raises the costs of a stud holder and require space. Indeed, the assembly of the sensor equipment on the stud holder is necessary and if a stud holder has to be changed, the sensor equipment has to be removed from the old stud holder and mounted to the new stud holder. This step is time-consuming and difficult to implement in an industrial environment.

DE102014212735A1 (basis for the preamble of claims 1 and 8) is directed to a method for welding stud, in which an optical control of the stud holder is performed by means of an optical control device. The stud holder is moved from a welding position into a checking position for carrying out the optical control. An evaluation unit processes the image data of the stud holder and evaluates it with regard to the presence of a fault.

Such method implies an image comparison. The processor will detect or not the presence of a faulty stud holder. The faulty stud holder is then changed. However, such optical control does not allow an early detection of a faulty stud holder. Besides, the optical control can only be used in a very clean environment, in order to avoid any image disturbance.

It is hence an object of the present invention to at least alleviate the aforementioned shortcomings. According to the present invention, a method of controlling the remaining life time of a stud holder in a stud welding device, and an arrangement for implementing this method are defined in claims 1 and 8 respectively.

The deviation force of the segments is an indication of wear and the stud holder can be changed before a segment breaks Thus, an early detection of a faulty stud holder may be detected, before any breach of the tongue. Besides, such method may be easily implemented in any environment. The testing device is not cumbersome and can be used by any kind of pre-existing welding devices or stud holder without the need of modifying them.

In some embodiment, the testing tool deviates all tongues simultaneously. This allows to detect a general deviation force. A quick determination with only one measurement can be made.

In some embodiment, the testing tool deviates two adjacent tongues. A precise measurement can be made and the faulty tongues may be determined. This can enable to correct some parameters in the welding process. For example this can allow a determination of which tongues are the most affected.

In some embodiments, the testing tool is arranged between two adjacent tongues. This also allow a precise measurement.

In some embodiments, the testing tool deviates each tongue of the stud holder one by one, and wherein a testing force is measured for each of the tongues. A precise measurement can be made and the faulty tongues may be determined. This can enable to correct some parameters in the welding process. For example this can allow a determination of which tongues are the most affected.

In some embodiments, a step of providing a control unit and comparing the measured testing force value to a pre-determined value is provided. The comparison may be made by a processor and the results may be directly sent to a robot tool or to a manipulator.

In some embodiments, the stud holder is changed or cleaned if the measured testing force value does not sensibly match the pre-determined value. The method can thus be fully automated.

According to the present invention, the testing tool comprises a testing head with a triangular washer adapted to be inserted between two adjacent tongues of a stud holder. The washer can easily be inserted between two tongues.

And further according to the present invention, a processor connected to the sensor is provided. The processor is adapted to compare the measured testing force with a pre-determined force and to determine a condition of a stud holder

Other characteristics and advantages of the invention will readily appear from the following description of embodiments, provided as non-limitative examples, in reference to the accompanying drawings.

In the drawings:
Fig. 1 shows a stud holder and an arrangement according to the invention with a testing tool and a sensor, wherein the testing tool comprises a testing head and a testing body;
Fig. 2 shows a testing head, not being part of the present invention;
Fig. 3 shows a testing head according to the present invention;
Fig. 4 shows another testing head not being part of the present invention.

On the different figures, the same reference signs designate identical or similar elements

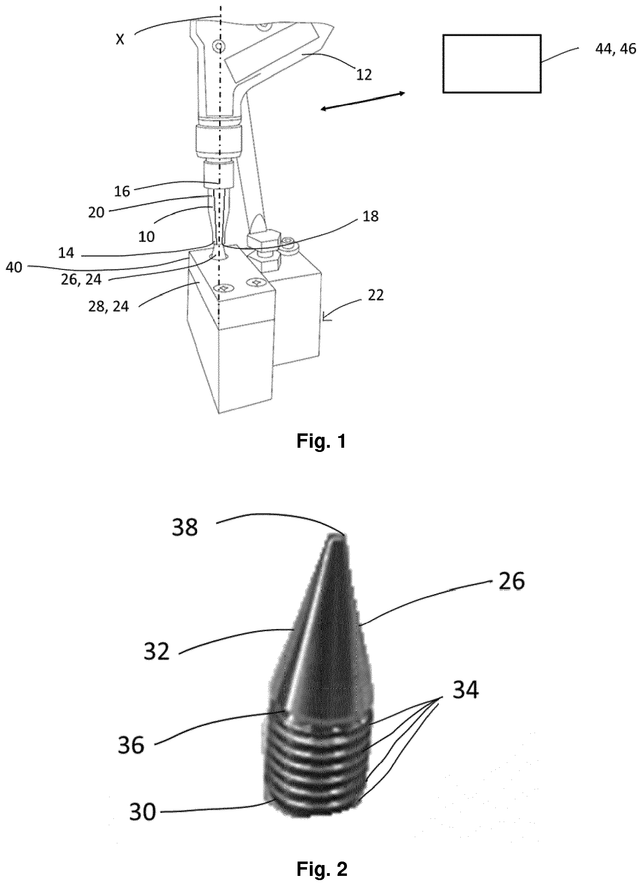

Fig. 1 shows a stud holder 10 connected to a robot tool 12. The stud holder 10 extends along a longitudinal axis X between a first end portion 14 and a second end portion 16. The stud holder 10 is a hollow tubular stud holder and comprises a recess 18.

The recess 18 is delimited by at least two tongues. As represented in Fig. 1, the recess 18 is delimited by a plurality of tongues 20. For instance, the stud holder 10 comprises six tongues 20.

The tongues 20 are evenly distributed around the longitudinal axis X. The tongues 20 have the same length along the longitudinal axis X. For instance, as represented in Fig. 1, the tongues 20 are identical. However, in another embodiments the tongues 20 may not be identical. For example, the tongues 20 may have different length along the longitudinal axis and/or different thickness.

The stud holder 10, and more particularly the tongues are made in a metal material. For example, the tongues 20 are made in spring steel.

The stud holder 10 comprises a pointed region and is tapered in its pointed region. The free end of the tongues 20 extends inwardly toward the longitudinal axis X.

The tongues 20 are elastically movable, such that the tongues may exert an elastic force on a stud to retain it during and/or before a welding step.

A gap is provided between two adjacent tongues 20, such that a relative movement of the tongues 20 is possible.

The stud holder 10 is used by a welding device to hold a stud during a welding process. During the welding, the stud holder 10 may be exposed to vibrations and/or projections which can lower its performance and/or cause premature wear.

Thus, after a pre-determined number of welding joints performed by the welding device with the same stud holder 10, said stud holder 10 may be tested by an arrangement 22 adapted to control the condition of the stud holder 10. More particularly the arrangement 22 is adapted to control if the stud holder 10 is still in good condition to be used in a welding process or if it has to be changed.

As illustrated in Fig. 1, the stud holder 10 is tested by the arrangement 22. The arrangement 22 comprises a testing device 24 with a testing tool 26 and a sensor 28 adapted to measure a testing force.

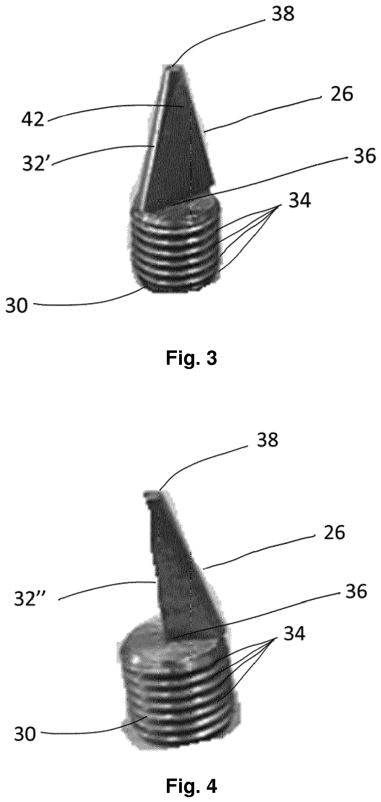

The testing tool 26 comprises a testing body 30 and a testing head 32, 32', 32". Fig. 2 and Fig. 4 describe examples not covered by the present invention, wherein Fig. 3 illustrates a testing tool with a testing head 32' according to the present invention.

The testing body 30, as visible in Fig. 1, Fig. 2, Fig. 3 and Fig. 4 comprises a cylindrical shape. For example, the testing body is adapted to be inserted in an opening of the testing device 24, such that a deformation of the testing body 30 may be measured by sensors provided in the testing device 24 and a testing force may be determined.

A measuring box with the sensor 28 is provided to collect the forces needed to deviate the tongues 20 (testing force).

For example the testing body 30 may be provided by a plurality of annular rings 34.

The testing head 32, 32', 32" extends from the testing body 30. More particularly, the testing head 32, 32', 32" comprises a base portion 36 in contact and extending from the base body 30. The testing head 32, 32', 32" further comprises a tip 38. The tip 38 is arranged opposite the base portion 36.

The testing head 32, 32', 32" is adapted to be inserted in the recess 18.Thus, the dimensions of the testing head are dependent from the dimensions of the stud holder 10.

As illustrated in Fig. 2, the testing head 32 has a conical shape.

The tongues 20 are adapted to be arranged surrounding the testing head 32. The stud holder is moved along the longitudinal axis X until a surface of the tongues 20 contacts the testing head 32. The stud holder is further moved along the longitudinal axis until the testing head 32 is able to deviate the tongues 20. The displacement or forces applied are then measured by a sensor 40.

The testing head 32 is adapted to simultaneously radially deviate the plurality of tongues 20.

According to the present invention, as illustrated in Fig. 3, the testing head 32' is provided with a washer 42. The washer 42 is adapted to be inserted between two adjacent tongues 20 of a stud holder 10. More particularly, the washer 42 is adapted to be arranged in the gap provided between two adjacent tongues 20.

The washer 42 as represented in Fig. 3 and according to the present invention, is a triangular washer.

The thickness of the washer 42 is dependent from the width of the gap between two tongues. The thickness of the washer may be exactly equal to or smaller or greater than the width of the gap.

The washer 42 is adapted to deviate two adjacent tongues 20. The displacement or forces applied are measured by the sensor 40.

As illustrated in Fig. 4, the testing head 32" has a conical portion shape. More particularly, the testing head is formed by a portion only of a cone, such that the testing head 32" is adapted to radially deviate only one tongue 20. The displacement or forces applied are measured by the sensor 40.

For the testing heads 32, 32', 32", the measuring box with the sensor measures the force needed to deviate the tongue 20 or tongues 20 from a pre-defined stroke. The stroke may, for example, be between 2 and 10 millimetres, for example around 5 millimetres. The measured force (testing force) is compared to a pre-determined value in order to determinate the wear of the stud holder

The arrangement 22 may be used to implement a method of controlling the condition of the stud holder 10. The method comprises the following steps.

In a first step, the stud holder 10 is provided.

In a second step, the testing device 26 is provided. The testing device 26 is provided with one testing tool having either the testing head according to Fig. 2 or the testing head according to Fig. 3, or the testing head according to Fig. 4, depending on the test to be made. Eventually, the testing device 26 may be provided with three different test beds, each test bed having a different testing head 32, 32', 32".

In a third step the stud holder 10 is arranged facing the testing head 32, 32', 32", such that the longitudinal axis X of the stud holder is coaxial with the main axis of the testing tool 28. The stud holder 10 is then moved toward the testing head 32, 32', 32" until the stud holder 10 contacts the testing head 32, 32', 32". The testing body 30 remains outside of the recess 18.

In a fourth step, the deviating forces are measured. The forces in Newton needed to deviate one tongue or two tongues or a plurality of tongues is converted in an electric current by the measuring box. This electric current is compared to a target electric current value.

In a fifth step, the condition of the stud holder 10 is determined. More precisely it is determined if the stud holder may be further used or need to be cleaned or need to be changed.

A processor 44 and a control unit 46 may interact with the sensor to compare the measured forces values with pre-determine values. The processor 44 may diagnose the operational status of the stud holder 10.

The processor 44 and the control unit 46 can send to the welding device or any other controlling tool the order to change or clean the stud holder, if needed. According to the present invention, the processor 44 determines the remaining life time of the stud holder 10 and the stud holder can be changed after said remaining life time.

## Claims

1. Method of controlling the remaining life time of a stud holder (10) comprising the step of:
- providing a stud holder (10) extending along a longitudinal axis (X) and comprising a plurality of tongues distributed around the longitudinal axis (X) and forming a recess (18) adapted to receive a stud for its welding to a workpiece;
the method being further **characterised by** the following steps:
- providing a testing device comprising a testing tool (26) and a sensor (40) adapted to measure a testing force of the testing tool (26),
- arranging the stud holder (10) and the testing tool (26) relative to each other such that a deflection of at least one tongue is performed by the testing tool (26);
- measuring the testing force for deviating the tongue; and
- determining the condition of the stud holder (10).

2. Method according to claim 1, wherein the testing tool (26) deviates all tongues simultaneously.

3. Method according to claim 1 or 2, wherein the testing tool (26) deviates two adjacent tongues.

4. Method according to claim 3, wherein the testing tool (26) is arranged between two adjacent tongues.

5. Method according to any of claims 1 to 4, wherein the testing tool (26) deviates each tongue of the stud holder (10) one by one, and wherein a testing force is measured for each of the tongues.

6. Method according to any of claims 1 to 5, further comprising a step of providing a control unit (46) and comparing the measured testing force value to a pre-determined value

7. Method according to claim 6, wherein the stud holder (10) is changed or cleaned if the measured testing force value does not sensibly match the pre-determined value

8. Arrangement (22) for implementing the method according to any of claims 1 to 7 comprising a testing device
being **characterised by**:
the testing device comprising a testing tool (26) and a sensor (40) adapted to measure a testing force, wherein the testing tool (26) comprises a testing head (32') with a triangular washer adapted to be inserted between two adjacent tongues of a stud holder (10),
and a processor connected to the sensor (40), the processor being adapted to compare the measured testing force with a pre-determined force and to determine the remaining life time of the stud holder (10), so that the stud holder can be changed after said remaining life time.

## Patentansprüche

1. Verfahren zum Prüfen der verbleibenden Standzeit eines Bolzenhalters (10), das den folgenden Schritt umfasst:
- Bereitstellen eines Bolzenhalters (10), der sich entlang einer Längsachse (X) erstreckt und eine Vielzahl von Zungen umfasst, die um die Längsachse (X) verteilt sind und eine Eintiefung (18) bilden, die dazu angepasst ist, einen Bolzen zum Schweißen desselben an ein Werkstück aufzunehmen;
wobei das Verfahren weiter durch die folgenden Schritte gekennzeichnet ist:
- Bereitstellen einer Prüfvorrichtung, die ein Prüfwerkzeug (26) und einen Sensor (40), der dazu angepasst ist, eine Prüfkraft des Prüfwerkzeugs (26) zu messen, umfasst,
- Anordnen des Bolzenhalters (10) und des Prüfwerkzeugs (26) derart relativ zueinander, dass eine Auslenkung mindestens einer Zunge durch das Prüfwerkzeug (26) durchgeführt wird;
- Messen der Prüfkraft zum Ablenken der Zunge; und
- Bestimmen des Zustands des Bolzenhalters (10).

2. Verfahren nach Anspruch 1, wobei das Prüfwerkzeug (26) alle Zungen gleichzeitig ablenkt.

3. Verfahren nach Anspruch 1 oder 2, wobei das Prüfwerkzeug (26) zwei benachbarte Zungen ablenkt.

4. Verfahren nach Anspruch 3, wobei das Prüfwerkzeug (26) zwischen zwei benachbarten Zungen angeordnet wird.

5. Verfahren nach einem der Ansprüche 1 bis 4, wobei das Prüfwerkzeug (26) jede Zunge des Bolzenhalters (10) der Reihe nach ablenkt und wobei eine Prüfkraft für jede der Zungen gemessen wird.

6. Verfahren nach einem der Ansprüche 1 bis 5, weiter umfassend einen Schritt eines Bereitstellens einer Steuereinheit (46) und eines Vergleichens des gemessenen Prüfkraftwerts mit einem vorbestimmten Wert.

7. Verfahren nach Anspruch 6, wobei der Bolzenhalter (10) ausgewechselt oder gereinigt wird, wenn der gemessene Prüfkraftwert nicht sinnvoll mit dem vorbestimmten Wert übereinstimmt.

8. Anordnung (22) zum Implementieren des Verfahrens nach einem der Ansprüche 1 bis 7, die eine Prüfvorrichtung umfasst, die **dadurch gekennzeichnet ist, dass**:
die Prüfvorrichtung ein Prüfwerkzeug (26) und einen Sensor (40), der dazu angepasst ist, eine Prüfkraft zu messen, umfasst, wobei das Prüfwerkzeug (26) einen Prüfkopf (32') mit einer dreieckigen Distanzscheibe, die dazu angepasst ist, zwischen zwei benachbarte Zungen eines Bolzenhalters (10) eingesetzt zu werden, umfasst, und
einen Prozessor umfasst, der mit dem Sensor (40) verbunden ist, wobei der Prozessor dazu angepasst ist, die gemessene Prüfkraft mit einer vorbestimmten Kraft zu vergleichen und die verbleibende Standzeit des Bolzenhalters (10) zu bestimmen, sodass der Bolzenhalter nach der verbleibenden Standzeit ausgewechselt werden kann.

## Revendications

1. Procédé de contrôle de la durée de vie restante d'un porte-goujon (10) comprenant l'étape consistant à :
- fournir un porte-goujon (10) s'étendant le long d'un axe longitudinal (X) et comprenant une pluralité de languettes réparties autour de l'axe longitudinal (X) et formant un évidement (18) adapté pour recevoir un goujon pour son soudage sur une pièce à usiner ;
le procédé étant en outre **caractérisé par** les étapes suivantes :
- fournir un dispositif de test comprenant un outil de test (26) et un capteur (40) adaptés pour mesurer une force de test de l'outil de test (26),
- agencer le porte-goujon (10) et l'outil de test (26) l'un par rapport à l'autre de telle sorte qu'une déviation d'au moins une languette est réalisée par l'outil de test (26) ;
- mesurer la force de test pour dévier la languette ; et
- déterminer l'état du porte-goujon (10).

2. Procédé selon la revendication 1, dans lequel l'outil de test (26) dévie toutes les languettes simultanément.

3. Procédé selon la revendication 1 ou 2, dans lequel l'outil de test (26) dévie deux languettes adjacentes.

4. Procédé selon la revendication 3, dans lequel l'outil de test (26) est agencé entre deux languettes adjacentes.

5. Procédé selon l'une quelconque des revendications 1 à 4, dans lequel l'outil de test (26) dévie chaque languette du porte-goujon (10) une par une, et dans lequel une force de test est mesurée pour chacune des languettes.

6. Procédé selon l'une quelconque des revendications 1 à 5, comprenant en outre une étape de fourniture d'une unité de commande (46) et de comparaison de la valeur de force de test mesurée à une valeur prédéterminée.

7. Procédé selon la revendication 6, dans lequel le porte-goujon (10) est changé ou nettoyé si la valeur de force de test mesurée ne correspond sensiblement pas à la valeur prédéterminée.

8. Agencement (22) pour mettre en œuvre le procédé selon l'une quelconque des revendications 1 à 7 comprenant un dispositif de test
**caractérisé par** :
le dispositif de test comprenant un outil de test (26) et un capteur (40) adaptés pour mesurer une force de test, dans lequel l'outil de test (26) comprend une test de test (32') avec une rondelle triangulaire adaptée pour être insérée entre deux languettes adjacentes d'un porte-goujon (10),
et un processeur connecté au capteur (40), le processeur étant adapté pour comparer la force de test mesurée avec une force prédéterminée et pour déterminer la durée de vie restante du porte-goujon (10), de sorte que le porte-goujon peut être changé après ladite durée de vie restante.
